# FASCICULE DE BREVET EUROPEEN

(11) **EP 4 055 300 B1**
(45) Date de publication et mention de la délivrance du brevet: **01.01.2025**
(21) Numéro de dépôt: 20800220.4
(22) Date de dépôt: 06.11.2020
(51) Int. Cl.: F16H 1/06

(54) **ELEMENT D'ENGRENAGE A ROULEAUX**
ROLLENLAUFWERKSELEMENT
ROLLER GEAR ELEMENT

(30) Priorité: 08.11.2019 FR 1912588
(43) Date de publication de la demande: 14.09.2022
(73) Titulaire: Safran Landing Systems, 78140 Vélizy-Villacoublay (FR)
(72) Inventeur: BISSIERES, Denis, 77550 Moissy-Cramayel (FR)
(74) Mandataire: Cabinet Boettcher
(86) Numéro de dépôt international: PCT/EP2020/081392
(87) Numéro de publication internationale: WO 2021/089852

(56) Documents cités:
- EP-A1- 3 048 044
- EP-A2- 2 700 848
- CN-A- 102 678 880

## Description

La présente invention concerne un élément d'engrenage à rouleaux, notamment bien que non exclusivement d'une roue motorisée d'aéronef.

### ARRIERE PLAN DE L'INVENTION

Dans le domaine de l'aviation, il est désormais prévu d'équiper les aéronefs d'organes d'entraînement en rotation des roues pour permettre le déplacement au sol de l'aéronef sans utiliser ses groupes motopropulseurs. En général, ces organes d'entraînement comportent un moteur électrique relié à un réducteur dont la sortie est équipée d'un pignon. Le pignon coopère avec une couronne dentée solidaire de la roue d'aéronef. De cette manière, le moteur électrique entraîne en rotation le pignon, qui entraîne à son tour la couronne dentée et donc la roue pour déplacer l'aéronef.

Bien évidemment, ce genre d'entraînement nécessite l'utilisation d'un moteur électrique associé à un réducteur proposant un couple particulièrement élevé. L'engrenage formé par le pignon et la couronne dentée doit alors être effectué sans glissement et présenter un jeu le plus faible possible pour résister au couple du moteur, notamment lors du démarrage où le couple est délivré relativement brutalement.

Un tel type d'engrènement est connu du document EP 3 048 044 et est rendu possible via l'utilisation d'un pignon à rouleaux, lequel comporte une pluralité de rouleaux destinés à coopérer avec les dents de la couronne dentée. Les rouleaux sont généralement supportés et guidés en rotation par des paliers équipés de coussinets autolubrifiés permettant d'empêcher un glissement avec les dents de la couronne dentée. Ainsi, deux rouleaux sont à tout moment en contact avec une même dent de la couronne dentée, ce qui permet une transmission sans jeu avec un très haut rendement.

Néanmoins, les coussinets sont reconnus être des pièces d'usure qu'il convient de remplacer régulièrement pour éviter une usure prématurée des rouleaux et des dents de la couronne dentée, ce qui entraîne des temps et des coûts de maintenance non négligeables.

Par ailleurs, la charge admissible sur les coussinets étant limitée, la rangée de dents de la couronne dentée et la rangée de rouleaux du pignon sont en général doublées. Le pignon est alors couplé à l'arbre de sortie du réducteur via un dispositif d'accouplement de type rotule à doigt idéalement à retour élastique à une position neutre qui permet à la fois de transférer le couple de l'arbre de sortie du réducteur au pignon et de garantir un contact simultané des deux rangées de dents avec les deux rangées de rouleaux en autorisant une légère inclinaison dudit pignon par rapport à la couronne dentée. Un tel dispositif d'accouplement entraîne une masse et une complexité supplémentaire.

### OBJET DE L'INVENTION

L'invention a donc pour objet de proposer un élément d'engrenage permettant d'obvier au moins en partie aux problèmes précités.

### RESUME DE L'INVENTION

A cet effet, on propose, selon l'invention, un élément d'engrenage comprenant un support sur lequel sont montés en alternance des premiers rouleaux et des deuxièmes rouleaux destinés à coopérer avec des dents d'un élément d'engrenage voisin. Chaque rouleau comprend un axe longitudinal autour duquel il est monté mobile en rotation via des moyens de guidage en rotation coopérant avec des portions d'extrémité du rouleau.

Selon l'invention, les moyens de guidage en rotation des premiers rouleaux et les moyens de guidage en rotation des deuxièmes rouleaux sont disposés en quinconce au voisinage d'un pourtour externe du support.

Selon un mode de réalisation préféré de l'invention, les moyens de guidage en rotation des premiers rouleaux s'étendent partiellement en regard des moyens de guidage en rotation des deuxièmes rouleaux suivant un axe de rotation de l'élément d'engrenage, ce qui permet de maximiser le nombre de rouleaux de l'élément d'engrenage vis-à-vis de l'encombrement des moyens de guidage en rotation.

De manière particulière, les moyens de guidage en rotation des premiers rouleaux et les moyens de guidage en rotation des deuxièmes rouleaux sont identiques.

De manière particulière, les premiers rouleaux et les deuxièmes rouleaux sont identiques.

Selon une caractéristique particulière de l'invention, les moyens de guidage en rotation des premiers rouleaux et/ou les moyens de guidage en rotation des deuxièmes rouleaux comprennent au moins un roulement à billes.

De façon connue en soi, les roulements à billes admettent des charges radiales élevées, ce qui permet à l'élément d'engrenage de supporter des couples d'entrainement importants sans nécessairement doubler la rangée de rouleaux de l'élément d'engrenage.

Par ailleurs, il est reconnu que les roulements à billes ont une durée de vie élevée permettant de limiter les temps et des coûts de maintenance de l'élément d'engrenage.

De manière particulière, le roulement à billes est un roulement à contact radial.

Selon une autre caractéristique particulière de l'invention, les axes longitudinaux des premiers rouleaux et des deuxièmes rouleaux sont parallèles à l'axe de rotation de l'élément d'engrenage.

L'invention concerne également un ensemble d'entraînement d'une roue d'aéronef, comportant un premier élément d'engrenage lié en rotation à la roue et un deuxième élément d'engrenage lié en rotation à un moteur, au moins l'un des éléments d'engrenage étant du type précédent.

L'invention a également pour objet un aéronef comportant au moins une roue pourvue d'un tel ensemble d'entraînement

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en perspective d'un élément d'engrenage selon un mode de réalisation particulier de l'invention dont des rouleaux coopèrent avec des dents d'une couronne dentée ;
- la figure 2 est une vue de l'élément d'engrenage illustré à la figure 1, en coupe par un plan passant par l'axe de rotation de l'élément d'engrenage et l'axe longitudinal de l'un des rouleaux ;

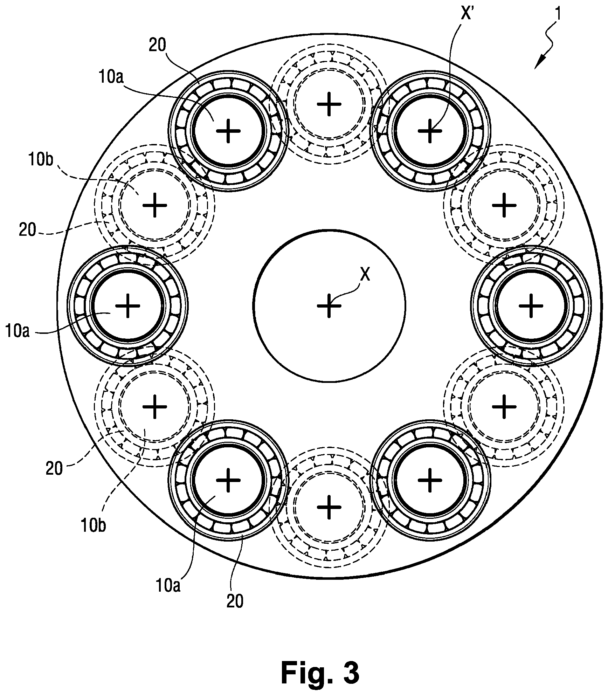

- la figure 3 est une vue de côté de l'élément d'engrenage illustré à la figure 1.

### DESCRIPTION DETAILLEE DE L'INVENTION

L'invention est ici décrite en application à un ensemble d'entraînement d'une roue d'aéronef, comportant un premier élément d'engrenage lié en rotation à la roue et un deuxième élément d'engrenage lié en rotation à un moteur.

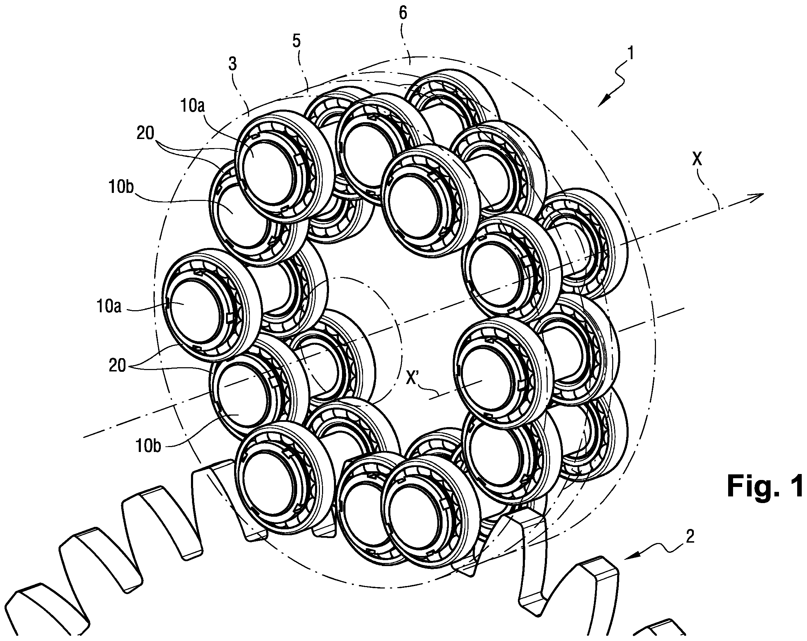

En référence à la figure 1, l'invention comprend un élément d'engrenage 1 qui est en contact avec une couronne dentée 2 comportant une rangée de dents. L'élément d'engrenage 1 a un axe de rotation X parallèle à un axe de rotation de la couronne dentée 2.

L'élément d'engrenage 1 comporte un support 3 sur lequel sont montés en alternance une pluralité de premiers rouleaux 10a et de deuxièmes rouleaux 10b symétriquement répartis autour de l'axe de rotation X.

Le support 3 comporte un noyau central 4 dont la forme est assimilable à celle d'un tube droit dont l'axe longitudinal est confondu avec l'axe de rotation X de l'élément d'engrenage. Le noyau central 4 a des extrémités pourvues respectivement d'un premier flasque 5 et d'un deuxième flasque 6. Le premier flasque 5 et le deuxième flasque 6 ont une forme générale en anneau circulaire d'axe central confondu avec l'axe de rotation X. Le premier flasque 5 et le deuxième flasque 6 s'étendent en saillie radiale vers l'extérieur du noyau central 4 et ont donc des diamètres externes sensiblement identiques qui sont supérieurs au diamètre externe du noyau central 4. Le premier flasque 5 et le deuxième flasque 6 délimitent ainsi entre eux une gorge dont le fond est formé par la surface externe du noyau central 4.

Le premier flasque 5 comporte une face externe sur laquelle débouchent des alésages 5a identiques et symétriquement répartis autour de l'axe de rotation X au voisinage du pourtour externe dudit premier flasque 5. Chacun des alésages 5a est de forme cylindrique d'axe parallèle à l'axe de rotation X. Les centres des alésages 5a s'inscrivent sur un même cercle dont le centre est situé sur l'axe de rotation X.

Le premier flasque 5 comporte également une face interne sur laquelle débouchent des alésages 5b identiques et symétriquement répartis autour de l'axe de rotation X au voisinage du pourtour externe dudit premier flasque 5. Chacun des alésages 5b est de forme cylindrique d'axe parallèle à l'axe de rotation X. Les centres des alésages 5b s'inscrivent sur un même cercle dont le centre est situé sur l'axe de rotation X et dont le diamètre est identique à celui du cercle sur lequel s'inscrivent les centres des alésages 5a.

Le nombre d'alésages 5b est identique au nombre d'alésages 5a et le diamètre des alésages 5b est identique à celui des alésages 5a.

Par ailleurs, les alésages 5b sont angulairement décalés par rapport aux alésages 5a de sorte que lorsque l'on regarde le support 3 suivant l'axe de rotation X, les alésages 5b apparaissent comme intercalés de manière uniforme entre les alésages 5a, l'axe central de chacun des alésages 5b étant à équidistance des axes centraux des deux alésages 5a voisins et chacun des alésages 5b s'étendant partiellement en regard des deux alésages 5a voisins.

De manière similaire, le deuxième flasque 6 comporte une face interne et une face externe sur lesquelles débouchent respectivement des alésages 6a et des alésages 6b qui sont respectivement en regard des alésages 5a et des alésages 5b du premier flasque 5. Les alésages 6a, 6b sont de forme et de diamètre identiques aux alésages 5a, 5b. Ainsi, les alésages 6a, 6b sont de forme cylindrique et sont symétriquement répartis autour de l'axe de rotation X au voisinage du pourtour externe du deuxième flasque 6. De la même manière, les centres des alésages 6a, 6b s'inscrivent sur un même cercle dont le centre est situé sur l'axe de rotation X.

Dans chaque alésage 5a, 5b du premier flasque 5 est monté serré un roulement 20 à billes à contact radial qui est immobilisé en translation via des anneaux de blocage 30. Les roulements 20 montés dans les alésages 5a, 5b sont ainsi disposés en quinconce, chacun de ces roulements étant décalé axialement par rapport à ses deux voisins et s'étendant partiellement en regard, selon l'axe de rotation, des deux roulements 20 voisins.

De préférence, les roulements 20 comprennent de chaque côté une protection latérale formée par exemple par un flasque ou un joint en caoutchouc synthétique permettant d'assurer une lubrification à vie desdits roulements 20.

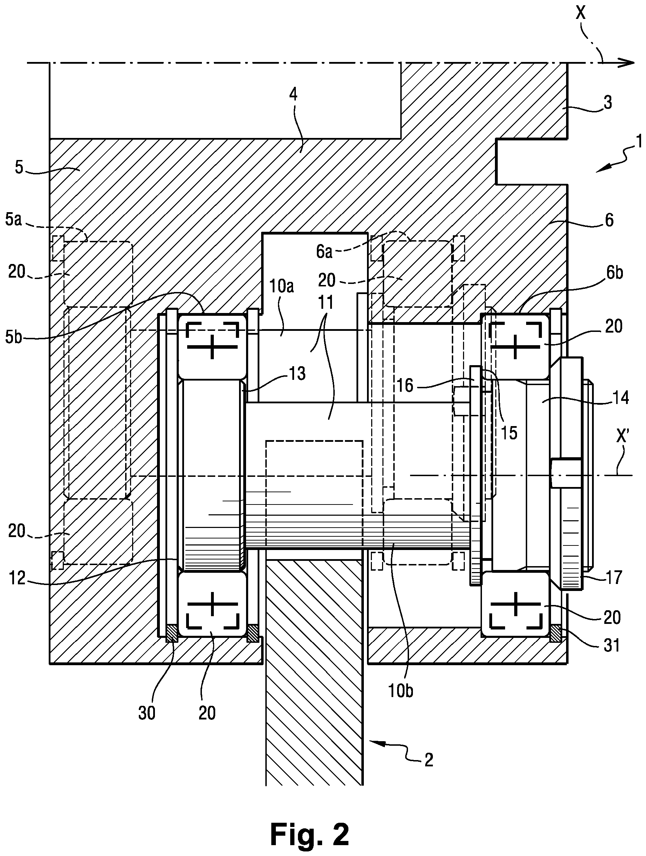

En référence à la figure 2, les premiers rouleaux 10a et les deuxièmes rouleaux 10b sont identiques. Ils comprennent un tronçon principal 11 ayant une extrémité pourvue d'une collerette 12 en saillie radiale définissant un premier épaulement 13 et une autre extrémité munie d'une portée cylindrique de plus grand diamètre qui est prolongée par une portion filetée 14 et qui se raccorde au tronçon principal par un deuxième épaulement 15 et un troisième épaulement 16 formant butée. Les diamètres de la collerette 12 et de la portée cylindrique sont sensiblement identiques.

Chaque portée cylindrique prolongée par la portion filetée 14 reçoit un roulement 20 à billes qui est maintenu en position contre l'épaulement 16 via un écrou 17 vissé sur ladite portion filetée 14.

L'élément d'engrenage 1 illustré à la figure 1 comprend six rouleaux 10a et six rouleaux 10b, soit au total douze rouleaux. Les rouleaux 10a, 10b sont insérés dans le support 3 par les logements 6a, 6b suivant une translation le long de l'axe longitudinal X' de chacun des rouleaux 10a, 10b, du deuxième flasque 6 vers le premier flasque 5.

Les collerettes 12 des rouleaux 10a sont alors introduites dans les bagues intérieures des roulements 20 montés serrés dans les alésages 5a du premier flasque 5 tandis que les alésages 6a du deuxième flasque 6 reçoivent les bagues extérieures des roulements 20 montés sur les portions filetée 14 des rouleaux 10a.

De même, les collerettes 12 des rouleaux 10b sont alors introduites dans les bagues intérieures des roulements 20 montés serrés dans les alésages 5b du premier flasque 5 reçoivent les collerettes 12 des rouleaux 10b tandis que les alésages 6b du deuxième flasque 6 reçoivent les bagues extérieures des roulements 20 montés sur les portions filetée 14 des rouleaux 10b.

Les roulements 20 montés sur les portées cylindriques prolongées par les portions filetée 14 des rouleaux 10a, 10b se retrouvent ainsi disposés en quinconce, chacun de ces roulements étant décalés axialement par rapport à ses deux voisins et s'étendant partiellement en regard, selon l'axe de rotation, des deux roulements 20 voisins.

Dès lors, les rouleaux 10a, 10b sont montés mobiles en rotation sur le support 3 autour de leur axe longitudinal X' et sont disposés en quinconce au voisinage du pourtour des flasques 5, 6 dudit support.

Le maintien des rouleaux 10a, 10b dans le support 3 est assuré par des anneaux de blocages 31 venant immobiliser en translation le long de l'axe longitudinal X' la bague extérieure des roulements 20 reçues dans les alésages 6a, 6b du deuxième flasque.

La rotation de l'élément d'engrenage 1 autour de son axe X entraîne alors à son tour la rotation de la couronne dentée 2, les rouleaux 10a, 10b entrant successivement en contact avec les dents de la couronne dentée 2. Les rouleaux 10a, 10b permettent en fait de coopérer sans glissement avec la rangée de dents de la couronne dentée 2. Idéalement, les dents de la couronne dentée 2 sont conformées pour coopérer sans jeu avec les rouleaux 10a, 10b.

L'élément d'engrenage 1 et la couronne dentée 2 forment ainsi un engrenage droit classique dans lequel les rouleaux 10a, 10b tournent autour de l'axe de rotation X de l'élément d'engrenage 1 mais aussi autour de leur axe longitudinal X'.

Bien entendu, l'invention n'est pas limitée aux modes de réalisation décrits mais englobe toute variante entrant dans le champ de l'invention telle que définie par les revendications.

Bien que l'élément d'engrenage 1 puisse s'apparenter à un pignon au regard de la figure 1, le diamètre de l'élément d'engrenage 1 peut être supérieur à celui de la couronne dentée 2.

Bien que l'élément d'engrenage 1 coopère ici avec une couronne dentée 2, l'élément d'engrenage 1 peut par exemple coopérer avec une crémaillère.

Bien que les diamètres des alésages soient ici identiques, ceux-ci peuvent varier d'un flasque à l'autre à condition de ne pas entraver la possibilité de montage des rouleaux sur le support de l'élément d'engrenage.

Les roulements 20 peuvent être d'un type différent que celui illustrés à la figure 2.

L'immobilisation des roulements en translation peut être assurer de manière différente à celle illustrée à la figure 2.

Le support peut être réalisé d'une seule pièce, par usinage, ou en plusieurs pièces. Dans ce dernier cas, les flasques sont par exemple rapportés sur le noyau central puis soudés sur celui-ci ; ou assemblés de manière démontable par exemple en prévoyant des cannelures pour l'immobilisation en rotation des flasques par rapport au noyau central et des éléments filetés/taraudés pour leur immobilisation axiale.

Bien que l'élément d'engrenage ait été décrit en application à un ensemble d'entraînement d'une roue d'aéronef, l'invention est applicable à tout type de train d'engrenages.

Bien que les roulements 20 soient ici des roulements à billes, d'autres types de roulement peuvent être envisagés, notamment des roulements à rouleaux coniques ou des roulements à aiguilles.

Les premiers rouleaux 10a et les deuxièmes rouleaux 10b peuvent être différents, notamment en ce qui concerne leurs dimensions. Par exemple, le tronçon principal des premiers rouleaux 10b peut avoir une longueur différente de celui des deuxièmes rouleaux 10b. Il en est de même pour la longueur des collerettes et celle des portées cylindriques.

## Revendications

1. Elément d'engrenage (1) comprenant un support (3) sur lequel sont montés en alternance des premiers rouleaux (10a) et des deuxièmes rouleaux (10b) destinés à coopérer avec des dents d'un élément d'engrenage (2) voisin, chaque rouleau (10a, 10b) comprenant un axe longitudinal (X') autour duquel il est monté mobile en rotation via des moyens de guidage en rotation (20) coopérant avec des portions d'extrémité du rouleau (10a, 10b), **caractérisé en ce que** les moyens de guidage en rotation (20) des premiers rouleaux (10a) et les moyens de guidage en rotation (20) des deuxièmes rouleaux (10b) sont disposés en quinconce au voisinage d'un pourtour externe du support (3).

2. Elément d'engrenage (1) selon la revendication 1, dans lequel les moyens de guidage en rotation (20) des premiers rouleaux (10a) s'étendent partiellement en regard des moyens de guidage en rotation (20) des deuxièmes rouleaux (10b) suivant un axe de rotation (X) de l'élément d'engrenage (1).

3. Elément d'engrenage (1) selon l'une quelconque des revendications précédentes, dans lequel les moyens de guidage en rotation (20) des premiers rouleaux (10a) et les moyens de guidage en rotation (20) des deuxièmes rouleaux (10b) sont identiques.

4. Elément d'engrenage (1) selon l'une quelconque des revendications précédentes, dans lequel les premiers rouleaux (10a) et les deuxièmes rouleaux (10b) sont identiques.

5. Elément d'engrenage (1) selon l'une quelconque des revendications précédentes, dans lequel les moyens de guidage en rotation (20) des premiers rouleaux (10a) et/ou les moyens de guidage en rotation (20) des deuxièmes rouleaux (10b) comprennent au moins un roulement à billes.

6. Elément d'engrenage (1) selon la revendication 5, dans lequel le roulement à billes est un roulement à contact radial.

7. Elément d'engrenage (1) selon la revendication 2, dans lequel les axes longitudinaux (X') des premiers rouleaux (10a) et des deuxièmes rouleaux (10b) sont parallèles à l'axe de rotation (X) de l'élément d'engrenage (1).

8. Ensemble d'entraînement d'une roue d'aéronef, comportant un premier élément d'engrenage (1) lié en rotation à la roue et un deuxième élément d'engrenage (2) lié en rotation à un moteur, au moins l'un des éléments d'engrenage (1, 2) étant conforme à l'une quelconque des revendications précédentes.

9. Aéronef comportant au moins une roue pourvue d'un ensemble d'entraînement selon la revendication 8.

## Patentansprüche

1. Getriebeelement (1) mit einem Träger (3), auf dem abwechselnd erste Rollen (10a) und zweite Rollen (10b) montiert sind, die dazu bestimmt sind, mit Zähnen eines benachbarten Getriebeelements (2) zusammenzuwirken, wobei jede Rolle (10a, 10b) eine Längsachse (X') aufweist, um welche herum sie über Drehführungsmittel (20), die mit Endabschnitten der Rolle (10a, 10b) zusammenwirken, drehbeweglich montiert ist, **dadurch gekennzeichnet, dass** die Drehführungsmittel (20) der ersten Rollen (10a) und die Drehführungsmittel (20) der zweiten Rollen (10b) benachbart zu einem Außenumfang des Trägers (3) gegeneinander versetzt angeordnet sind.

2. Getriebeelement (1) nach Anspruch 1, wobei sich die Drehführungsmittel (20) der ersten Rollen (10a) in Bezug auf eine Drehachse (X) des Getriebeelements (1) den Drehführungsmitteln (20) der zweiten Rollen (10b) teilweise gegenüberliegend erstrecken.

3. Getriebeelement (1) nach einem der vorhergehenden Ansprüche, wobei die Drehführungsmittel (20) der ersten Rollen (10a) und die Drehführungsmittel (20) der zweiten Rollen (10b) identisch ausgebildet sind.

4. Getriebeelement (1) nach einem der vorhergehenden Ansprüche, wobei die ersten Rollen (10a) und die zweiten Rollen (10b) identisch ausgebildet sind.

5. Getriebeelement (1) nach einem der vorhergehenden Ansprüche, wobei die Drehführungsmittel (20) der ersten Rollen (10a) und/oder die Drehführungsmittel (20) der zweiten Rollen (1b) jeweils zumindest ein Kugellager umfassen.

6. Getriebeelement (1) nach Anspruch 5, wobei es sich bei dem Kugellager um ein Radialkontaktlager handelt.

7. Getriebeelement (1) nach Anspruch 2, wobei die Längsachsen (X') der ersten Rollen (10a) und der zweiten Rollen (10b) parallel zu der Drehachse (X) des Getriebeelements (1) verlaufen.

8. Antriebsanordnung eines Luftfahrzeugrads, welche ein drehfest mit dem Rad verbundenes, erstes Getriebeelement (1) und ein drehfest mit einem Motor verbundenes, zweites Getriebeelement (2) enthält, wobei zumindest eines der Getriebeelemente (1, 2) gemäß einem der vorhergehenden Ansprüche ausgebildet ist.

9. Luftfahrzeug, welches zumindest ein Rad mit einer Antriebsanordnung nach Anspruch 8 enthält.

## Claims

1. Gear element (1) comprising a support (3) on which first rollers (10a) and second rollers (10b) are alternately mounted, which are intended for engaging with the teeth of a neighbouring gear element (2), each rollers (10a, 10b) being mounted for rotation about its longitudinal axis (X') via rotary guide means (20) cooperating with end portions of the rollers (10a, 10b), **characterised in that** the rotary guide means (20) of the first rollers (10a) and the rotary guide means (20) of the second rollers (10b) are staggered in the vicinity of an outer periphery of the support (3).

2. Gear element (1) according to claim 1, wherein the rotary guide means (20) of the first rollers (10a) partially extend facing the rotary guide means (20) of the second rollers (10b) about the axis of rotation (X) of the gear element (1).

3. Gear element (1) according to any one of the preceding claims, wherein the rotary guide means (20) of the first rollers (10a) and the rotary guide means (20) of the second rollers (10b) are identical.

4. Gear element (1) according to any one of the preceding claims, wherein the first rollers (10a) and the second rollers (10b) are identical.

5. Gear element (1) according to any one of the preceding claims, wherein the rotary guide means (20) of the first rollers (10a) and/or the rotary guide means (20) of the second rollers (10b) comprise at least one ball bearing.

6. Gear element (1) according to claim 5, wherein the ball bearing (20) is a radial rolling-element bearing.

7. Gear element (1) according to claim 2, wherein the longitudinal axes (X') of the first rollers (10a) and of the second rollers (10b) are parallel to the axis of rotation (X) of the gear element (1).

8. Assembly for driving an aircraft wheel, comprising a first gear element (1) connected in rotation to the wheel and a second gear element (2) connected in rotation to a motor, at least one of the gear elements (1, 2) being according to any one of the preceding claims.

9. Aircraft comprising at least one wheel provided with a drive assembly according to claim 8.
